# EUROPEAN PATENT APPLICATION

(11) **EP 4 528 864 A1**
(43) Date of publication of application: **26.03.2025**
(21) Application number: 22956887.8
(22) Date of filing: 31.08.2022
(51) Int. Cl.: H01M 10/04, H01M 50/531, H01M 10/0587, H01M 50/342, H01M 50/536, H01M 50/502

(54) **BATTERY CELL, BATTERY, AND ELECTRIC DEVICE**

(71) Applicant: Contemporary Amperex Technology Co., Limited, Fujian 352100 (CN)
(72) Inventor: XU, Hu, Ningde City, Fujian 352100 (CN); JIN, Haizu, Ningde City, Fujian 352100 (CN); GUO, Jipeng, Ningde City, Fujian 352100 (CN); NIU, Shaojun, Ningde City, Fujian 352100 (CN); ZHAO, Fenggang, Ningde City, Fujian 352100 (CN)
(74) Representative: Gong, Jinping
(86) International application number: PCT/CN2022/116250
(87) International publication number: WO 2024/045058

(57) **Abstract**

The present application provides a battery cell, a battery, and an electrical device, relating to the field of batteries. The battery cell includes an electrode assembly, a shell, an electrode terminal, and a current collecting member. The electrode assembly has a tab. The shell is used for accommodating the electrode assembly. The electrode terminal is disposed at one end of the shell in a first direction. The current collecting member is provided with a hollow region, and the hollow region divides the current collecting member into a first connection region and a second connection region located on two sides of the hollow region. The first connection region is connected to the tab, and the second connection region is connected to the electrode terminal. The current collecting member is provided with the hollow region, the hollow region divides the current collecting member into the first connection region and the second connection region, and the first connection region and the second connection region are connected to the tab and the electrode terminal respectively. When the electrode terminal is subjected to stress, the hollow region enables the second connection region to deform relative to the first connection region, so that the stress is not easily transmitted to the first connection region, and the first connection region is unlikely to separate from the tab, thereby prolonging the service life of the battery cell.

## Description

### Technical Field

The present application relates to the field of batteries, and in particular, to a battery cell, a battery, and an electrical device.

### Background Art

Batteries are widely used in the field of new energy, such as electric vehicles and new energy vehicles, which have become a new trend in the development of the automotive industry. The development of battery technologies needs to consider various design factors simultaneously, such as energy density, discharge capacity, charge and discharge rates, and other performance parameters of batteries. In addition, service lives of the batteries should be further considered. However, the service lives of the existing batteries are short.

### Summary

Embodiments of the present application aim to provide a battery cell, a battery, and an electrical device to solve the problem of short service lives of batteries in related technologies.

In a first aspect, an embodiment of the present application provides a battery cell, which includes an electrode assembly, a shell, an electrode terminal, and a current collecting member, where the electrode assembly has a tab; the shell is used for accommodating the electrode assembly; the electrode terminal is disposed at one end of the shell in a first direction; and the current collecting member is provided with a hollow region, the hollow region divides the current collecting member into a first connection region and a second connection region located on two sides of the hollow region, the first connection region is connected to the tab, and the second connection region is connected to the electrode terminal.

In the foregoing technical solution, the current collecting member of the battery cell is provided with the hollow region, the hollow region divides the current collecting member into the first connection region and the second connection region, and the first connection region and the second connection region are connected to the tab and the electrode terminal respectively. When the electrode terminal is subjected to stress, the hollow region enables the second connection region to deform relative to the first connection region, so that the stress is not easily transmitted to the first connection region, the first connection region is unlikely to move under stress, and the first connection region is unlikely to separate from the tab, thereby prolonging the service life of the battery cell. In short, when the electrode terminal is subjected to stress, the entire current collecting member is unlikely to move, but the second connection region deforms relative to the first connection region, so that the first connection region is unlikely to separate from the tab, thereby prolonging the service life of the battery cell.

As an optional technical solution of the embodiments of the present application, the hollow region includes two slit portions provided at intervals, the slit portions pass through two surfaces of the current collecting member in a thickness direction, and the second connection region is formed at a portion of the current collecting member between the two slit portions.

In the foregoing technical solution, by configuring the two slit portions that run through the two surfaces of the current collecting member in the thickness direction, the second connection region located between the two slit portions is prone to deformation. When the electrode terminal is subjected to stress, the stress is not easily transmitted to the first connection region, the first connection region is unlikely to move under stress, and the first connection region is unlikely to separate from the tab, thereby prolonging the service life of the battery cell. Moreover, the slit portions are easy to form, which can reduce the production cost of the current collecting member.

As an optional technical solution of the embodiments of the present application, the slit portion is an arc-shaped slit.

In the foregoing technical solution, the arc-shaped slits make the second connection region more prone to deformation.

As an optional technical solution of the embodiments of the present application, openings of the two slit portions are opposite to each other.

In the foregoing technical solution, the openings of the two slit portions are opposite to each other, which is beneficial to dividing the large first connection region to increase the connection area between the first connection region and the tab. Even if stress is transmitted to the first connection region, the first connection region is unlikely to separate from the tab due to the large connection area between the first connection region and the tab.

As an optional technical solution of the embodiments of the present application, the current collecting component is of a flat plate structure.

In the foregoing technical solution, the flat plate structure of the current collecting member occupies less space of the battery cell, which is beneficial to increasing energy density of the battery cell.

As an optional technical solution of the embodiments of the present application, the battery cell includes two electrode terminals, the two electrode terminals have opposite polarities and are disposed at two ends of the shell in the first direction, and each electrode terminal is connected to a corresponding tab through a current collecting member.

In the foregoing technical solution, two electrode terminals are configured, one electrode terminal serves as a positive electrode of the battery cell, and the other electrode terminal serves as a negative electrode of the battery cell. In this case, the battery cell does not need to use the shell body as the negative electrode of the battery cell, so that the shell body is less prone to corrosion and a short circuit is unlikely to occur between two adjacent battery cells.

As an optional technical solution of the embodiments of the present application, the shell includes a shell body and an end cover, one end of the shell body in the first direction has an opening, the end cover closes the opening, one electrode terminal is disposed on the shell body, and the other electrode terminal is disposed on the end cover.

In the foregoing technical solution, the shell body has the opening at one end in the first direction, which facilitates insertion of the electrode assembly into the shell (assembling the electrode assembly into the shell body) during the production of the battery cell. The end cover closes the opening to isolate the inside and outside of the shell body, so as to prevent external impurities from damaging the battery cell. One electrode terminal is disposed on the end cover and the other electrode terminal is disposed on the shell body to facilitate production and reduce production costs.

As an optional technical solution of the embodiments of the present application, the shell includes a shell body and two end covers, two ends of the shell body in the first direction has openings repectively, the two end covers close the two openings, and the two electrode terminals are disposed on the two end covers in one-to-one correspondence respectively.

In the foregoing technical solution, the shell body has the openings at two ends in the first direction, which facilitates insertion of the electrode assembly into the shell (assembling the electrode assembly into the shell body) during the production of the battery cell. The end covers close the openings to isolate the inside and outside of the shell body, so as to prevent external impurities from damaging the battery cell. The two electrode terminals are disposed on the two end covers in one-to-one correspondence to facilitate production and reduce production costs.

As an optional technical solution of the embodiments of the present application, in the first direction, a height of a portion, protruding from the shell, of the electrode terminal is H, and a length of the shell is L, satisfying H/L ≤ 0.02.

In the foregoing technical solution, the height of the portion, protruding from the shell, of the electrode terminal in the first direction is not more than 0.02 times the length of the shell in the first direction. In this case, the height of the portion, protruding from the shell, of the electrode terminal in the first direction is relatively small, so less space is occupied and the energy density of the battery can be increased. If H/L > 0.02, the height of the portion, protruding from the shell, of the electrode terminal in the first direction is relatively large, so a lot of space is occupied and the energy density of the battery cannot be increased.

As an optional technical solution of the embodiments of the present application, H/L ≤ 0.015.

In the foregoing technical solution, the height of the portion, protruding from the shell, of the electrode terminal in the first direction is not more than 0.015 times the length of the shell in the first direction. In this case, the height of the portion, protruding from the shell, of the electrode terminal in the first direction is relatively small, so less space is occupied and the energy density of the battery can be increased.

As an optional technical solution of the embodiments of the present application, the shell is cylindrical, an outer diameter of the shell is D, and the length of the shell in the first direction is L, satisfying L/D ≥ 2.

In the foregoing technical solution, the shell is cylindrical, and the battery cell is a cylindrical battery cell. The ratio of the length of the shell in the first direction to the outer diameter of the shell is limited to be greater than or equal to 2, so that the internal space of the battery cell is prone to utilization.

As an optional technical solution of the embodiments of the present application, the electrode terminal includes a first terminal portion and a second terminal portion of different materials, the first terminal portion is connected to the second terminal portion, the first terminal portion is connected to the current collecting member, and the second terminal portion is mounted on the shell.

In the foregoing technical solutions, generally, the material of the tab is different from that of a busbar member, but the same material facilitates welding. Therefore, the material of the current collecting member may be the same as that of the tab to facilitate welding between the current collecting member and the tab. The material of the first terminal portion is the same as that of the current collecting member to facilitate welding between the first terminal portion and the current collecting member. The material of the second terminal portion is the same as that of the busbar member to facilitate welding between the second terminal portion and the busbar member.

As an optional technical solution of the embodiments of the present application, the material of the first terminal portion is copper, and the material of the second terminal portion is aluminum.

In the foregoing technical solution, generally, the material of the tab is copper, so the material of the first terminal portion is also copper. The material of the busbar member is aluminum, so the material of the second terminal portion is also aluminum.

As an optional technical solution of the embodiments of the present application, the second terminal portion encloses an outer side of the first terminal portion.

In the foregoing technical solution, the first terminal portion is located in the middle of the electrode terminal to facilitate welding with the current collecting member. The second terminal portion encloses the outer side of the first terminal portion to facilitate mounting on the shell and welding with the busbar member.

As an optional technical solution of the embodiments of the present application, the first terminal portion is formed with a cavity having an opening at one end.

In the foregoing technical solution, by forming the cavity with an opening at one end in the first terminal portion, the weight of the first terminal portion can be reduced, which is beneficial to reducing the weight of the battery cell.

As an optional technical solution of the embodiments of the present application, the electrode terminal includes a third terminal portion, the third terminal portion is connected to the second terminal portion and closes the opening, and the third terminal portion is used for connection with the busbar member.

In the foregoing technical solution, by configuring the third terminal portion, the third terminal portion can be connected to the busbar member to increase the connection area between the electrode terminal and the busbar member, so that the connection between the electrode terminal and the busbar member is more convenient. On the other hand, the third terminal portion closes the opening to prevent impurities outside the battery cell from accumulating in the cavity.

As an optional technical solution of the embodiments of the present application, the first terminal portion and the second terminal portion are laminated in the first direction.

In the foregoing technical solution, the first terminal portion and the second terminal portion are laminated, so that the first terminal portion has a large connection area with the current collecting member, and the second terminal portion also has a large connection area with the busbar member.

As an optional technical solution of the embodiments of the present application, a cavity is formed inside the second terminal portion.

In the foregoing technical solution, by forming the cavity inside the second terminal portion, the weight of the second terminal portion can be reduced, which is beneficial to reducing the weight of the battery cell.

In a second aspect, an embodiment of the present application provides a battery, which includes a box and the foregoing battery cell, where the battery cell is accommodated in the box.

In a third aspect, an embodiment of the present application provides an electrical device, which includes the foregoing battery cell for providing electrical energy, or the foregoing battery for providing electrical energy.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle provided by some embodiments of the present application;
FIG. 2 is an exploded view of a battery provided by some embodiments of the present application;
FIG. 3 is a schematic structural diagram of a battery cell provided by some embodiments of the present application;
FIG. 4 is an exploded view of the battery cell provided by some embodiments of the present application;
FIG. 5 is a schematic structural diagram of a current collecting member provided by some embodiments of the present application;
FIG. 6 is a schematic structural diagram of a current collecting member provided by other embodiments of the present application;
FIG. 7 is a schematic structural diagram of a current collecting member provided by still other embodiments of the present application;
FIG. 8 is a front view of a battery cell provided by some embodiments of the present application;
FIG. 9 is an exploded view of a battery cell provided by other embodiments of the present application;
FIG. 10 is a schematic top view of the battery cell provided by some embodiments of the present application;
FIG. 11 is a cross-sectional view of position B-B in FIG. 10 (a second terminal portion encloses an outer side of a first terminal portion);
FIG. 12 is a cross-sectional view of position B-B in FIG. 10 (adding a third terminal portion on the basis of FIG. 11);
FIG. 13 is a cross-sectional view of position B-B in FIG. 10 (adding an abutting portion on the basis of FIG. 12);
FIG. 14 is a cross-sectional view of position B-B position in FIG. 10 (the first terminal portion and the second terminal portion are laminated); and
FIG. 15 is a cross-sectional view of position B-B in FIG. 10 (adding a third terminal portion on the basis of FIG. 14).

Reference numerals: 10 - box; 11 - first portion; 12 - second portion; 20 - battery cell; 21 - electrode assembly; 22 - shell; 221 - shell body; 222 - end cover; 23 - electrode terminal; 231 - first terminal portion; 2311 - cavity; 2312 - abutting portion; 232 - second terminal portion; 233 - third terminal portion; 24 - current collecting member; 241 - first connection region; 242 - second connection region; 2431 - slit portion; 2432 - first slit portion; 2433 - second slit portion; 243 - hollow region; 100 - battery; 200 - controller; 300 - motor; 1000 - vehicle.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application. In the present application, "a plurality of" means two (inclusive) or more.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which is also not limited by the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells. The box may prevent liquid or other foreign matters from affecting charging or discharging of the battery cells.

The battery cell includes an electrode assembly and an electrolytic solution, where the electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive electrode tab. **In** an example of a lithium-ion battery, a material of the positive electrode current collector may be aluminum, and a positive electrode active material may be lithium cobaltate, lithium iron phosphate, ternary lithium, lithium manganate, or the like. The negative electrode plate includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative electrode tab. A material of the negative electrode current collector may be copper, and a negative electrode active material may be carbon, silicon, or the like. In order to ensure that no fusing occurs when high current passes through, there is a plurality of positive electrode tabs laminated together, and there is a plurality of negative electrode tabs laminated together. A material of the separator may be polypropylene (PP), polyethylene (PE), or the like. Moreover, the electrode assembly may be of a wound structure or a laminated structure, and the embodiments of the present application are not limited thereto.

The development of battery technologies needs to consider various design factors simultaneously, such as energy density, discharge capacity, charge and discharge rates, and other performance parameters of batteries. In addition, service lives of the batteries should be further considered. However, the service lives of the existing batteries are short.

The inventor found in further research that the battery cell includes an electrode assembly, an electrode terminal, and a current collecting member, where the electrode assembly has a tab, the tab of the electrode assembly is electrically connected to the electrode terminal through the current collecting member, and the electrode terminal is used for outputting or inputting electrical energy of the battery cell. In order to facilitate the output or input of the electrical energy of the battery cell, the electrode terminal generally protrudes from a shell of the battery cell. In this case, the electrode terminal is susceptible to stress. The stress borne by the electrode terminal is easily transmitted to the current collecting member, and drives the overall current collecting member to move, so that the connection between the current collecting member and the tab fails, the battery cell is damaged, and the service life of the battery cell is short.

In view of this, an embodiment of the present application provides a battery cell, where a hollow region is disposed on a current collecting member, the hollow region divides the current collecting member into a first connection region and a second connection region, and the first connection region and the second connection region are connected to a tab and an electrode terminal respectively. When the electrode terminal is subjected to stress, the hollow region enables the second connection region to deform relative to the first connection region, so that the stress is not easily transmitted to the first connection region, the first connection region is unlikely to move under stress, and the first connection region is unlikely to separate from the tab, thereby prolonging the service life of the battery cell. In short, when the electrode terminal is subjected to stress, the entire current collecting member is unlikely to move, but the second connection region deforms relative to the first connection region, so that the first connection region is unlikely to separate from the tab, thereby prolonging the service life of the battery cell.

The technical solutions described in the embodiments of the present application are applicable to batteries and electrical devices using batteries.

The electrical device may be a vehicle, a mobile phone, a portable device, a notebook computer, a ship, a spacecraft, an electric toy, an electric tool, or the like. The spacecraft includes an airplane, a rocket, a space shuttle, a spaceship, or the like; the electric toy includes a fixed or mobile electric toy, such as a game console, an electric car toy, an electric ship toy, or an electric aircraft toy; and the electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not limit the foregoing electrical devices.

For convenient description, the following embodiments are described by an example of a vehicle 1000 as an electrical device.

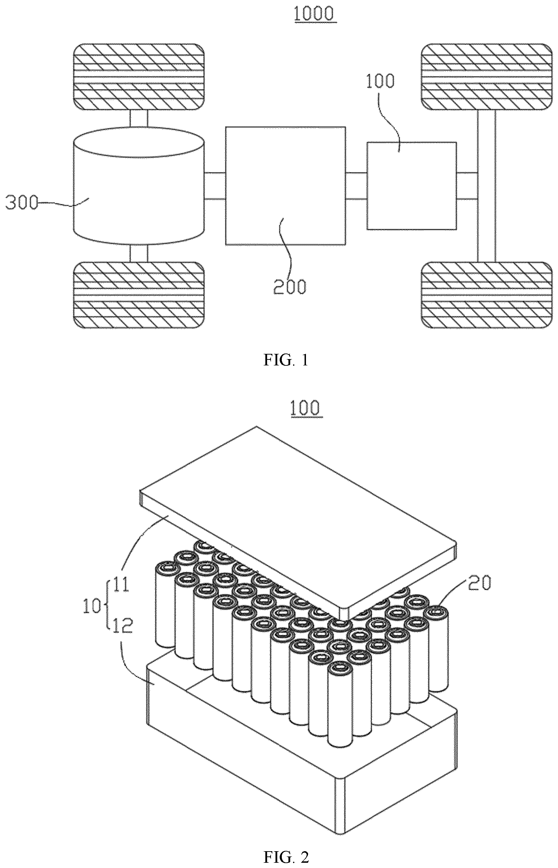

Refer to FIG. 1. FIG. 1 is a schematic structural diagram of a vehicle 1000 provided by some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is an exploded view of a battery 100 provided by some embodiments of the present application. The battery 100 includes a box 10 and battery cells 20, where the battery cells 20 are accommodated in the box 10. The box 10 is used for providing an accommodating space for the battery cells 20, and the box 10 may have many structures. In some embodiments, the box 10 may include a first portion 11 and a second portion 12, the first portion 11 and the second portion 12 cover each other, and the first portion 11 and the second portion 12 jointly confine the accommodating space for accommodating the battery cells 20. The second portion 12 may be of a hollow structure with an opening at one end, the first portion 11 may be of a plate-like structure, and the first portion 11 covers an open side of the second portion 12, so that the first portion 11 and the second portion 12 jointly confine the accommodating space; or each of the first portion 11 and the second portion 12 may be of a hollow structure with an open side, and the open side of the first portion 11 covers the open side of the second portion 12. Of course, the box 10 formed by the first portion 11 and the second portion 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the plurality of battery cells 20.

Each battery cell 20 may be a secondary battery cell or a primary battery cell, or may be a lithium-sulfur battery cell, a sodium-ion battery cell, or a magnesium-ion battery cell, but is not limited to this. The battery cells 20 may be cylindrical, flat, cuboid, or in other shapes.

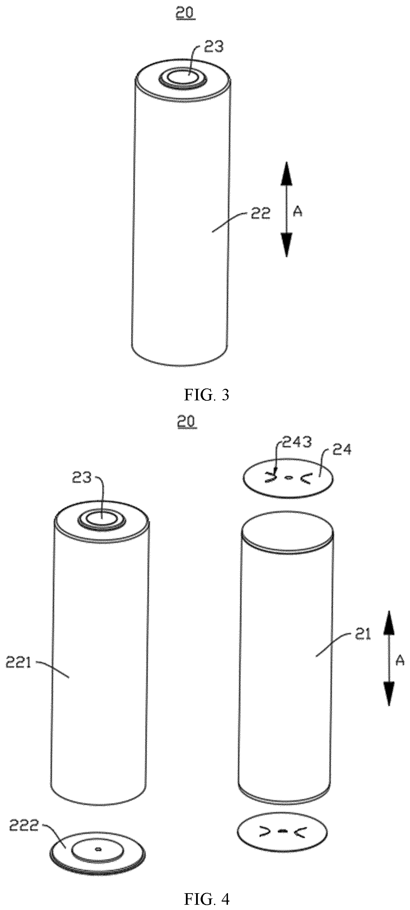

Refer to FIG. 3 and FIG. 4. FIG. 3 is a schematic structural diagram of a battery cell 20 provided by some embodiments of the present application. FIG. 4 is an exploded view of the battery cell 20 provided by some embodiments of the present application. The battery cell 20 refers to a minimum unit that constitutes the battery 100. As shown in FIG. 3 and FIG. 4, the battery cell 20 includes an electrode assembly 21, a shell 22, and other functional components. The shell 22 includes an end cover 222 and a shell body 221, where the end cover 222 is connected to the shell body 221.

The end cover 222 refers to a component that is closed to an opening of the shell body 221 to isolate an internal environment of the battery cell 20 from an external environment. Unlimitedly, a shape of the end cover 222 may adapt to that of the shell body 221 to fit the shell body 221. Optionally, the end cover 222 may be made of a material with certain hardness and strength (such as aluminum alloy). In this case, the end cover 222 is less prone to deformation during squeezing deformation, so that the battery cell 20 can have higher structural strength and its safety can be improved. A material of the end cover 222 may be various, such as copper, iron, aluminum, stainless steel, aluminum alloy, or plastic, and is not specially limited in the embodiments of the present application.

The shell body 221 is a component fitting the end cover 222 to form the internal environment of the battery cell 20, where the formed internal environment may be used for accommodating the electrode assembly 21, an electrolytic solution, and other components. The shell body 221 and the end cover 222 may be independent components, the shell body 221 may be provided with an opening, and the end cover 222 is closed to the opening to form the internal environment of the battery cell 20. Unlimitedly, the end cover 222 and the shell body 221 may be integrated. Specifically, the end cover 222 and the shell body 221 may form a common connection surface before other components are assembled into the shell. When the interior of the shell body 221 is to be packaged, the end cover 222 is closed to the shell body 221. A shape of shell body 221 may be determined according to a specific shape and size of the electrode assembly 21. A material of the shell body 221 may be various, such as copper, iron, aluminum, stainless steel, aluminum alloy, or plastic, and is not specially limited in the embodiments of the present application.

The electrode assembly 21 is a component that undergoes electrochemical reactions in the battery cell 20. The shell 22 may contain one or more electrode assemblies 21. The electrode assembly 21 is mainly formed by winding or laminating a positive electrode plate and a negative electrode plate, and a separator is usually disposed between the positive electrode plate and the negative electrode plate. Portions of the positive electrode plate and the negative electrode plate that contain active materials constitute a main body of the electrode assembly 21, while portions of the positive electrode sheet and the negative electrode plate that do not contain active materials constitute respective tabs. The positive electrode tab and the negative electrode tab may be located at one end of the main body or at two ends of the main body separately. In charging and discharging processes of the battery 100, the positive electrode active material and the negative electrode active material react with the electrolytic solution.

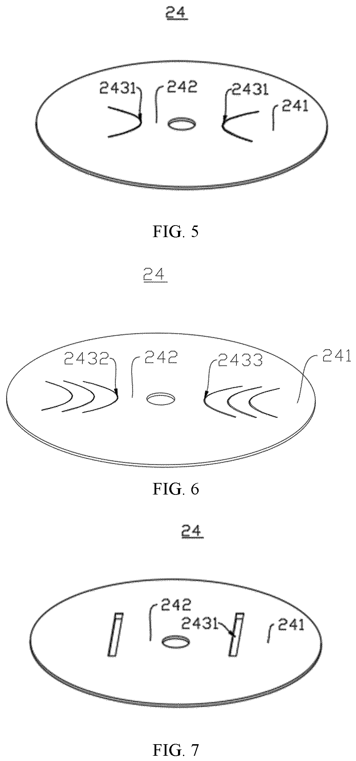

Refer to FIGs. 3, 4, and 5. FIG. 5 is a schematic structural diagram of a current collecting member 24 provided by some embodiments of the present application. An embodiment of the present application provides a battery cell 20. The battery cell 20 includes an electrode assembly 21, a shell 22, an electrode terminal 23, and a current collecting member 24. The electrode assembly 21 has a tab. The shell 22 is used for accommodating the electrode assembly 21. In a first direction A, the electrode terminal 23 is disposed at one end of the shell 22. The current collecting member 24 is provided with a hollow region 243, and the hollow region 243 divides the current collecting member 24 into a first connection region 241 and a second connection region 242 located on two sides of the hollow region 243. The first connection region 241 is connected to the tab, and the second connection region 242 is connected to the electrode terminal 23.

The electrode terminal 23 is a component electrically connected to the electrode assembly 21 to output or input electrical energy of the battery cell 20. The electrode terminal 23 is connected to a positive electrode tab to serve as a positive electrode of the battery cell 20. The electrode terminal 23 is connected to a negative electrode tab to serve as a negative electrode of the battery cell 20. The electrode terminal 23 is disposed at one end of the shell 22 in the first direction A. The first direction A may be the A direction shown in FIG. 3 or FIG. 4.

The current collecting member 24 is a component used for electrically connecting the tab and the electrode terminal 23. The tab may be connected to one side of the current collecting member 24, and the electrode terminal 23 may be connected to the other side of the current collecting member 24.

The hollow region 243 is a hollow portion on the current collecting member 24. The hollow region 243 divides the current collecting member 24 into the first connection region 241 and the second connection region 242, and the first connection region 241 and the second connection region 242 are located on the two sides of the hollow region 243 respectively. The first connection region 241 is connected to the tab, and the second connection region 242 is connected to the electrode terminal 23, so as to achieve the electrical connection between the tab and the electrode terminal 23.

The current collecting member 24 of the battery cell 20 is provided with the hollow region 243, the hollow region 243 divides the current collecting member 24 into the first connection region 241 and the second connection region 242, and the first connection region 241 and the second connection region 242 are connected to the tab and the electrode terminal 23 respectively. When the electrode terminal 23 is subjected to stress, the hollow region 243 enables the second connection region 242 to deform relative to the first connection region 241, so that the stress is not easily transmitted to the first connection region 241, the first connection region 241 is unlikely to move under stress, and the first connection region 241 is unlikely to separate from the tab, thereby prolonging the service life of the battery cell 20. **In** short, when the electrode terminal 23 is subjected to stress, the entire current collecting member 24 is unlikely to move, but the second connection region 242 deforms relative to the first connection region 241, so that the first connection region 241 is unlikely to separate from the tab, thereby prolonging the service life of the battery cell 20.

In some embodiments, a sealing member is further disposed between the electrode terminal 23 and the shell 22, and the sealing member seals the electrode terminal 23 and the shell 22 to prevent external water vapor from entering the interior of the shell 22 or the electrolytic solution inside the shell 22 from leaking. Specifically, the sealing member may be a sealing ring. Meanwhile, the sealing member may be made of an insulating material to insulate the electrode terminal 23 from the shell 22.

With reference to FIG. 4 and FIG. 5, in some embodiments, the hollow region 243 includes two spaced slit portions 2431, and the slit portions 2431 run through two surfaces of the current collecting member 24 in a thickness direction. The second connection region 242 is formed at a portion of the current collecting member 24 between the two slit portions 2431.

The slit portion 2431 refers to a through hole structure that runs through two sides of the current collecting member 24 in the thickness direction, and the through hole structure extends along a trajectory to form a slit.

In some embodiments, the current collecting member 24 is provided with two slit portions 2431, and the two slit portions 2431 are spaced to divide the second connection region 242 out between the two slit portions 2431.

By configuring the two slit portions 2431 that run through the two surfaces of the current collecting member 24 in the thickness direction, the second connection region 242 located between the two slit portions 2431 is prone to deformation. When the electrode terminal 23 is subjected to stress, the stress is not easily transmitted to the first connection region 241, the first connection region 241 is unlikely to move under stress, and the first connection region 241 is unlikely to separate from the tab, thereby prolonging the service life of the battery cell 20. Moreover, the slit portions 2431 are easy to form, which can reduce the production cost of the current collecting member 24.

In some embodiments, the slit portion 2431 is an arc-shaped slit.

The slit portion 2431 is of a slit structure that extends along an arc trajectory. The slit portion extending along the arc trajectory is arc-shaped, and therefore, is referred to as an arc-shaped slit in the present application. The slit portion 2431 may be an arc-shaped slit or a parabolic slit.

By using the arc-shaped slits, the second connection region 242 is prone to deformation. When the electrode terminal 23 is subjected to stress, the stress is not easily transmitted to the first connection region 241, and the first connection region 241 is unlikely to move under stress.

With reference to FIG. 5, in some embodiments, openings of the two slit portions 2431 are opposite to each other.

The arc-shaped slit has an opening. The opening of the slit portion 2431 refers to a position corresponding to a recess formed by a curved contour of the slit portion 2431 on the surface of the current collecting member 24. For example, the slit portions 2431 are arc-shaped slits, and the "openings of the two slit portions 2431 are opposite to each other" indicates that orientations of the openings of the two slit portions 2431 are opposite and the center of each slit portion 2431 is located outside the second connection region 242.

The openings of the two slit portions 2431 are opposite to each other, which is beneficial to dividing the large first connection region 241 to increase the connection area between the first connection region 241 and the tab. Even if stress is transmitted to the first connection region 241, the first connection region 241 is unlikely to separate from the tab due to the large connection area between the first connection region 241 and the tab.

**In** some embodiments, the current collecting member 24 is of a flat plate structure.

The flat plate structure of the current collecting member 24 occupies less space of the battery cell 20, which is beneficial to increasing the energy density of the battery cell 20.

Refer to FIG. 6. FIG. 6 is a schematic structural diagram of a current collecting member 24 provided by other embodiments of the present application. In other embodiments, the hollow region 243 includes a first hollow region and a second hollow region that are spaced, a plurality of first slit portions 2432 are disposed in the first hollow region, and a plurality of second slit portions 2433 are disposed in the second hollow region. The second connection region 242 is formed between the first hollow region and the second hollow region. Through the plurality of first slit portions 2432 and the plurality of second slit portions 2433, the second connection region 242 between the first hollow region and the second hollow region is more prone to deformation. When the electrode terminal 23 is subjected to stress, the stress is not easily transmitted to the first connection region 241, the first connection region 241 is unlikely to move under stress, and the first connection region 241 is unlikely to separate from the tab, thereby prolonging the service life of the battery cell 20. Further, opening directions of the plurality of first slit portions 2432 in the first hollow region are the same, and are opposite to opening directions of the plurality of second slit portions 2433 in the second hollow region. In this case, when the second connection region 242 undergoes deformation, some twisting directions between every two adjacent first slit portions 2432 are consistent, so that deformation resistance to the second connection region 242 is small, and the stress borne by the second connection region 242 is not easily transmitted to the first connection region 241.

Refer to FIG. 7. FIG. 7 is a schematic structural diagram of a current collecting member 24 provided by still other embodiments of the present application. In still other embodiments, the slit portion 2431 is a linear slit.

The slit portion 2431 is of a slit structure that extends along a linear trajectory. The slit portion extending along the linear trajectory is linear, and therefore, is referred to as a linear slit in the present application.

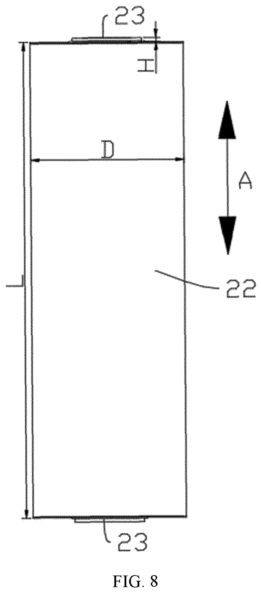

Refer to FIG. 3 to FIG. 8. FIG. 8 is a front view of a battery cell 20 provided by some embodiments of the present application. In some embodiments, the battery cell 20 includes two electrode terminals 23, and the two electrode terminals 23 have opposite polarities and are disposed at two ends of the shell 22 in the first direction A. Each electrode terminal 23 is connected to a corresponding tab through a current collecting member 24 mentioned in the foregoing embodiments of the present application.

The two electrode terminals 23 are located at the two ends of the shell 22 in the first direction A, respectively. One of the electrode terminals 23 is electrically connected to a positive electrode tab of the battery cell 20 to form a positive electrode of the battery cell 20. The other electrode terminal 23 is electrically connected to a negative electrode tab of the battery cell 20 to form a negative electrode of the battery cell 20.

One electrode terminal 23 is connected to the corresponding tab through a current collecting member 24. Specifically, one electrode terminal 23 is electrically connected to the positive electrode tab through a current collecting member 24 to form the positive electrode of the battery cell 20. The other electrode terminal 23 is electrically connected to the negative electrode tab through a current collecting member 24 to form the negative electrode of the battery cell 20.

The two electrode terminals 23 are configured, one electrode terminal 23 serves as the positive electrode of the battery cell 20, and the other electrode terminal 23 serves as the negative electrode of the battery cell 20. In this case, the battery cell 20 does not need to use the shell body 221 as the negative electrode of the battery cell 20, so that the shell body 221 is less prone to corrosion and a short circuit is unlikely to occur between two adjacent battery cells 20. The two electrode terminals 23 are connected to the corresponding tabs through a current collecting member 24 mentioned in the foregoing embodiments of the present application respectively, so that when each electrode terminal 23 is subjected to stress, the stress is not easily transmitted to the first connection region 241 of the corresponding current collecting member 24, and the first connection region 241 is unlikely to move to cause failure of the connection between the electrode terminal 23 and the corresponding tab.

With reference to FIG. 3 to FIG. 8, in some embodiments, the shell 22 includes a shell body 221 and an end cover 222, the shell body 221 has an opening at one end in the first direction A, and the end cover 222 closes the opening. One electrode terminal 23 is disposed on the shell body 221, and the other electrode terminal 23 is disposed on the end cover 222.

The shell body 221 has the opening at one end in the first direction A, which facilitates insertion of the electrode assembly 21 into the shell (assembling the electrode assembly 21 into the shell body 221) during the production of the battery cell 20. The end cover 222 closes the opening to isolate the inside and outside of the shell body 221, so as to prevent external impurities from damaging the battery cell 20. One electrode terminal 23 is disposed on the end cover 222 and the other electrode terminal 23 is disposed on the shell body 221 to facilitate production and reduce production costs.

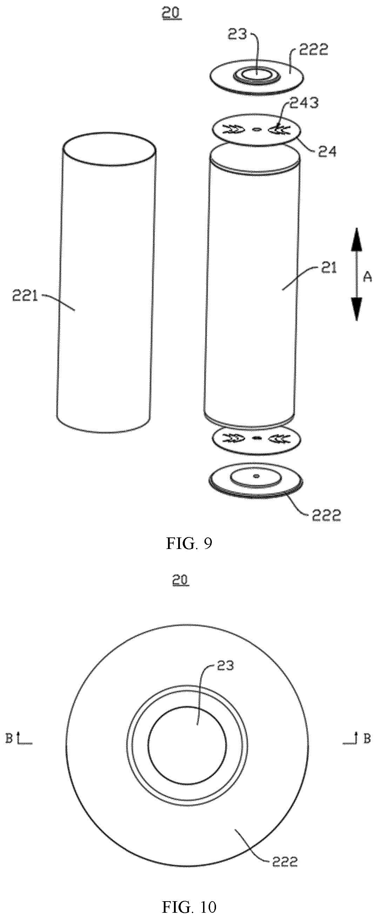

Refer to FIG. 9. FIG. 9 is an exploded view of a battery cell 20 provided by other embodiments of the present application. In other embodiments, the shell 22 includes a shell body 221 and two end covers 222, the shell body 221 has openings at two ends in the first direction A, and the two end covers 222 close the two openings. The two electrode terminals 23 are disposed on the two end covers 222 in one-to-one correspondence.

"The two electrode terminals 23 are disposed on the two end covers 222 in one-to-one correspondence" indicates that one electrode terminal 23 is disposed on one end cover 222 and the other electrode terminal 23 is disposed on the other end cover 222.

The shell body 221 has the openings at two ends in the first direction A, which facilitates insertion of the electrode assembly 21 into the shell (assembling the electrode assembly 21 into the shell body 221) during the production of the battery cell 20. The end covers 222 close the openings to isolate the inside and outside of the shell body 221, so as to prevent external impurities from damaging the battery cell 20. The two electrode terminals 23 are disposed on the two end covers 222 in one-to-one correspondence to facilitate production and reduce production costs.

With reference to FIG. 8 again, in some embodiments, in the first direction A, a height of a portion, protruding from the shell 22, of the electrode terminal 23 is H, and a length of the shell 22 is L, satisfying H/L ≤ 0.02.

H represents the height of the portion, protruding from the shell 22, of the electrode terminal 23 in the first direction A. The electrode terminal 23 is disposed at one end of the shell 22 in the first direction A. The height of the portion, protruding from the shell 22, of the electrode terminal 23 may alternatively be understood as a distance between an end face of one end of the shell 22 where the electrode terminal 23 is disposed and a surface of the electrode terminal 23 on an outer side of the shell 22 and away from the end face in the first direction A.

L is the length of the shell 22 in the first direction A. H/L represents a ratio of the height of the portion, protruding from the shell 22, of the electrode terminal 23 in the first direction A to the length of the shell 22 in the first direction A. A value of the ratio of the height of the portion, protruding from the shell 22, of the electrode terminal 23 in the first direction A to the length of the shell 22 in the first direction A may be: H/L = 0.02, 0.018, 0.015, 0.012, 0.01, 0.008, or the like.

The height of the portion, protruding from the shell 22, of the electrode terminal 23 in the first direction A is not more than 0.02 times the length of the shell 22 in the first direction A. **In** this case, the height of the portion, protruding from the shell 22, of the electrode terminal 23 in the first direction A is relatively small, so less space is occupied, and utilization efficiency of space when the battery 100 is grouped or assembled is improved, thereby increasing the energy density. If H/L > 0.02, the height of the portion, protruding from the shell 22, of the electrode terminal 23 in the first direction A is relatively large, so a lot of space is occupied, and utilization efficiency of space when the battery 100 is grouped or assembled cannot be improved.

In some embodiments, H/L ≤ 0.015.

The value of the ratio of the height of the portion, protruding from the shell 22, of the electrode terminal 23 in the first direction A to the length of the shell 22 in the first direction A may be: H/L = 0.015, 0.012, 0.01, 0.008, 0.005, or the like.

The height of the portion, protruding from the shell 22, of the electrode terminal 23 in the first direction A is not more than 0.015 times the length of the shell 22 in the first direction A. In this case, the height of the portion, protruding from the shell 22, of the electrode terminal 23 in the first direction A is relatively small, so less space is occupied, and utilization efficiency of space when the battery 100 is grouped or assembled is improved.

In some embodiments, the shell 22 is cylindrical, and an outer diameter of the shell 22 is D. The length of the shell 22 in the first direction A is L, satisfying L/D ≥ 2.

D represents the outer diameter of the cylindrical shell 22. L/D represents a ratio of the outer diameter of the shell 22 to the length L of the shell 22 in the first direction A. A value of the ratio of the outer diameter of the shell 22 to the length L of the shell 22 in the first direction A may be: L/D = 2, 2.5, 3, 3.5, 4, 4.5, 5, or the like.

The shell 22 is cylindrical, and the battery cell 20 is a cylindrical battery cell 20. Limiting the ratio of the length of the shell 22 in the first direction A to the outer diameter of the shell 22 to be greater than or equal to 2 is suitable for winding the electrode assembly 21, so that the electrode assembly 21 is easily assembled into the shell 22.

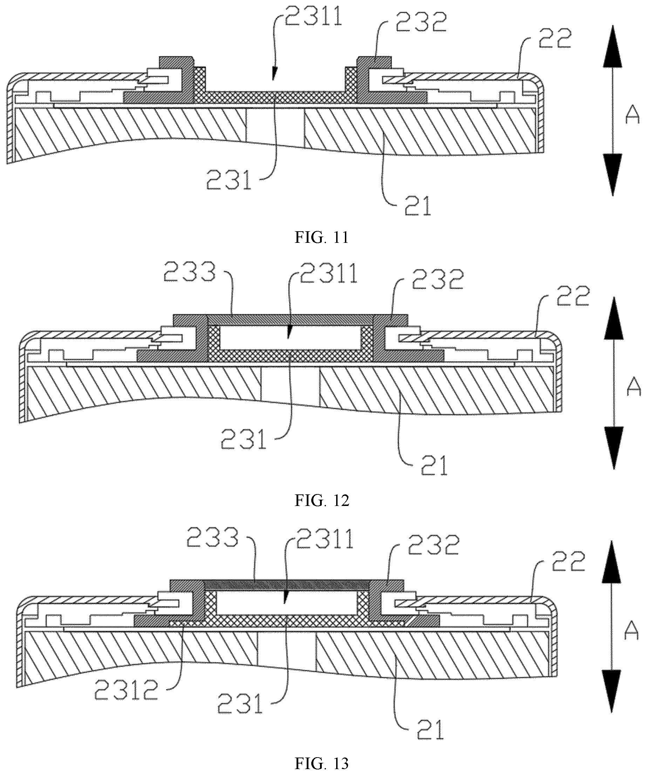

Refer to FIG. 10 and FIG. 11. FIG. 10 is a top view of the battery cell 20 provided by some embodiments of the present application. FIG. 11 is a cross-sectional view of position B-B in FIG. 10 (a second terminal portion 232 encloses an outer side of a first terminal portion 231). In some embodiments, the electrode terminal 23 includes a first terminal portion 231 and a second terminal portion 232 of different materials, and the first terminal portion 231 is connected to the second terminal portion 232. The first terminal portion 231 is connected to the current collecting member 24, and the second terminal portion 232 is mounted on the shell 22.

Different melting points of different materials lead to difficult welding of dissimilar metals, while the same melting point of the same material facilitates welding.

The first terminal portion 231 is a portion on the electrode terminal 23 for electrical connection with the current collecting member 24. The material of the first terminal portion 231 is the same as that of the current collecting member 24.

The second terminal portion 232 is a portion on the electrode terminal 23 for electrical connection with a busbar member. The second terminal portion 232 is mounted on the shell 22 to fix the electrode terminal 23 on the shell 22. The material of the second terminal portion 232 is the same as that of the busbar member. The busbar member may be a busbar.

The first terminal portion 231 is connected to the second terminal portion 232, and current is allowed to pass through the first terminal portion 231 and the second terminal portion 232, so as to output or input the electrical energy of the battery cell 20.

Generally, the material of the tab is different from that of the busbar member, but the same material facilitates welding. Therefore, the material of the current collecting member 24 may be the same as that of the tab to facilitate welding between the current collecting member 24 and the tab. The material of the first terminal portion 231 is the same as that of the current collecting member 24 to facilitate welding between the first terminal portion 231 and the current collecting member 24. The material of the second terminal portion 232 is the same as that of the busbar member to facilitate welding between the second terminal portion 232 and the busbar member.

**In** some embodiments, the material of the first terminal portion 231 is copper, and the material of the second terminal portion 232 is aluminum, so that the electrode terminal 23 becomes a composite terminal, that is, a terminal structure formed by combining different metals.

Generally, the material of the tab is copper, so the material of the first terminal portion 231 is also copper. The material of the busbar member is aluminum, so the material of the second terminal portion 232 is also aluminum.

With reference to FIG. 11, in some embodiments, the second terminal portion 232 encloses the outer side of the first terminal portion 231.

"The second terminal portion 232 encloses the outer side of the first terminal portion 231" may be understood as the second terminal portion 232 is sheathed on the outer side of the first terminal portion 231, but an inner surface of the second terminal portion 232 is connected to an outer surface of the first terminal portion 231.

The first terminal portion 231 is located in the middle of the electrode terminal 23 to facilitate welding with the current collecting member 24. The second terminal portion 232 encloses the outer side of the first terminal portion 231 to facilitate mounting on the shell 22 and welding with the busbar member.

The sealing member encloses the outer side of the second terminal portion 232 to seal the second terminal portion 232 with the shell 22.

With reference to FIG. 11, in some embodiments, the first terminal portion 231 is formed with a cavity 2311, and one end of the cavity 2311 is opened.

In some embodiments, the first terminal portion 231 is formed with the cavity 2311, the cavity 2311 has an opening, and the opening is formed at an end, away from the electrode assembly 21, of the first terminal portion 231. That is, the opening of the cavity 2311 is away from the electrode assembly 21.

By forming the cavity 2311 with an opening at one end in the first terminal portion 231, the weight of the first terminal portion 231 can be reduced, which is beneficial to reducing the weight of the battery cell 20, saving materials, and reducing material costs.

Refer to FIG. 12. FIG. 12 is a cross-sectional view of position B-B in FIG. 10 (adding a third terminal portion 233 on the basis of FIG. 11). In some embodiments, the electrode terminal 23 includes a third terminal portion 233, the third terminal portion 233 is connected to the second terminal portion 232 and closes the opening, and the third terminal portion 233 is used for connection with the busbar member.

The third terminal portion 233 may be connected to a side, away from the electrode assembly 21, of the second terminal portion 232 to close the opening of the cavity 2311 formed in the first terminal portion 231. The third terminal portion 233 may be used for welding with the busbar member to increase the connection area between the busbar member and the electrode terminal 23. Optionally, a material of the third terminal portion 233 may be the same as that of the busbar member to facilitate welding between the third terminal portion 233 and the busbar member.

By configuring the third terminal portion 233, the third terminal portion 233 can be connected to the busbar member to increase the connection area between the electrode terminal 23 and the busbar member, so that the connection between the electrode terminal 23 and the busbar member is more convenient. On the other hand, the third terminal portion 233 closes the opening to prevent impurities outside the battery cell 20 from accumulating in the cavity 2311.

Refer to FIG. 13. FIG. 13 is a cross-sectional view of position B-B in FIG. 10 (adding an abutting portion 2312 on the basis of FIG. 12). In some embodiments, in order to further limit the first terminal portion 231, an abutting portion 2312 is disposed on an outer circumference of the first terminal portion 231 in a protruding manner, and the abutting portion 2312 abuts against an end, facing the electrode assembly 21, of the second terminal portion 232 in the first direction A, so as to reduce a risk of separation of the first terminal portion 231 from the second terminal portion 232 in the first direction A.

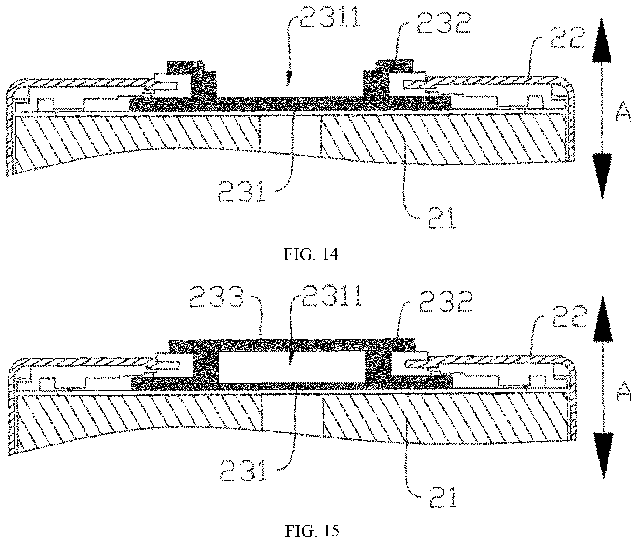

Refer to FIG. 14. FIG. 14 is a cross-sectional view of position B-B position in FIG. 10 (the first terminal portion 231 and the second terminal portion 232 are laminated). In some embodiments, the first terminal portion 231 and the second terminal portion 232 are laminated in the first direction A. Specifically, in some embodiments, the end, away from the electrode assembly 21, of the first terminal portion 231 is connected to the end, facing the electrode assembly 21, of the second terminal portion 232 in the first direction A to form a laminated structure in the first direction.

"The first terminal portion 231 and the second terminal portion 232 are laminated" may alternatively be understood as the first terminal portion 231 and the second terminal portion 232 are stacked in the first direction A. Because the first terminal portion 231 needs to be connected to the current collecting member 24, in the first direction A, the first terminal portion 231 and the second terminal portion 232 are sequentially disposed in a direction where the electrode assembly 21 points the end cover 222. In addition,a surface, facing the second terminal portion 232, of the first terminal portion 231 is connected to a surface, facing the first terminal portion 231, of the second terminal portion 232.

The first terminal portion 231 and the second terminal portion 232 are laminated, so that the first terminal portion 231 has a large connection area with the current collecting member 24, and the second terminal portion 232 also has a large connection area with the busbar member.

In some embodiments where the first terminal portion 231 and the second terminal portion 232 are laminated, a cavity 2311 is formed inside the second terminal portion 232.

The cavity 2311 is formed inside the second terminal portion 232, and the cavity 2311 may or may not have an opening. In the embodiment shown in FIG. 14, the cavity 2311 has an opening formed at an end, away from the first terminal portion 231, of the second terminal portion 232.

By forming the cavity 2311 inside the second terminal portion 232, the weight of the second terminal portion 232 can be reduced, which is beneficial to reducing the weight of the battery cell 20, saving materials, and reducing costs.

Refer to FIG. 15. FIG. 15 is a cross-sectional view of position B-B in FIG. 10 (adding a third terminal portion 233 on the basis of FIG. 14). In some embodiments, the electrode terminal 23 includes a third terminal portion 233, the third terminal portion 233 is connected to the second terminal portion 232 and closes the opening of the cavity 2311 formed inside the second terminal portion 232, and the third terminal portion 233 is used for connection with the busbar member. By configuring the third terminal portion 233, the third terminal portion 233 can be connected to the busbar member to increase the connection area between the electrode terminal 23 and the busbar member, so that the connection between the electrode terminal 23 and the busbar member is more convenient.

In some embodiments, the electrode terminal 23 is made of one material, and the materials of the first connection region 241 and the second connection region 242 of the current collecting member 24 are different. The material of the first connection region 241 is the same as that of the tab, and the material of the second connection region 242 is the same as that of the electrode terminal 23, to facilitate welding between the tab and the first connection region 241 and between the second connection region 242 and the electrode terminal 23. The material of the electrode terminal 23 is the same as that of the busbar member to facilitate welding between the electrode terminal 23 and the busbar member.

Similarly, in some embodiments, in addition to metal composite molding of different materials for the electrode terminal 23 or different designs for the materials of the first connection region 241 and second connection region 242 of the current collecting member 24, the current collecting member 24 may alternatively be configured as a composite conductive structure of one layer of copper and one layer of aluminum, that is, the plate-like current collecting member 24 includes a copper layer and an aluminum layer connected to each other; and the copper layer of the current collecting member 24 is welded to the tab made of copper, and the aluminum layer of the current collecting member 24 is welded to the electrode terminal made of aluminum.

An embodiment of the present application provides a battery 100. The battery 100 includes a box 10 and the foregoing battery cell 20, and the battery cell 20 is accommodated in the box 10.

An embodiment of the present application provides an electrical device. The electrical device includes the foregoing battery cell 20, where the battery cell 20 is used for providing electrical energy. Alternatively, the electrical device includes the foregoing battery 100, where the battery 100 is used for providing electrical energy.

According to some embodiments of the present application, refer to FIGs. 3 to 15.

An embodiment of the present application provides a battery cell 20. The battery cell 20 includes an electrode assembly 21, a shell 22, an electrode terminal 23, and a current collecting member 24. The electrode assembly 21 has a tab, and the shell 22 is used for accommodating the electrode assembly 21. In a first direction A, the electrode terminal 23 is disposed at one end of the shell 22. The current collecting member 24 is provided with a hollow region 243, and the hollow region 243 divides the current collecting member 24 into a first connection region 241 and a second connection region 242 located on two sides of the hollow region 243. The first connection region 241 is connected to the tab, and the second connection region 242 is connected to the electrode terminal 23. The hollow region 243 includes two arc-shaped slit portions 2431 spaced, the slit portions 2431 run through two surfaces of the current collecting member 24 in a thickness direction, and the second connection region 242 is formed at a portion of the current collecting member 24 between the two slit portions 2431.

The current collecting member 24 of the battery cell 20 is provided with the hollow region 243, the hollow region 243 divides the current collecting member 24 into the first connection region 241 and the second connection region 242, and the first connection region 241 and the second connection region 242 are connected to the tab and the electrode terminal 23 respectively. When the electrode terminal 23 is subjected to stress, the hollow region 243 enables the second connection region 242 to deform relative to the first connection region 241, so that the stress is not easily transmitted to the first connection region 241, the first connection region 241 is unlikely to move under stress, and the first connection region 241 is unlikely to separate from the tab, thereby prolonging the service life of the battery cell 20. **In** short, when the electrode terminal 23 is subjected to stress, the entire current collecting member 24 is unlikely to move, but the second connection region 242 deforms relative to the first connection region 241, so that the first connection region 241 is unlikely to separate from the tab, thereby prolonging the service life of the battery cell 20. By configuring the two slit portions 2431 that run through the two surfaces of the current collecting member 24 in the thickness direction, the second connection region 242 located between the two slit portions 2431 is prone to deformation. When the electrode terminal 23 is subjected to stress, the stress is not easily transmitted to the first connection region 241, the first connection region 241 is unlikely to move under stress, and the first connection region 241 is unlikely to separate from the tab, thereby prolonging the service life of the battery cell 20. Moreover, the slit portions 2431 are easy to form, which can reduce the production cost of the current collecting member 24. The arc-shaped slits make the second connection region 242 more prone to deformation.

The battery cell 20 includes two electrode terminals 23, the two electrode terminals 23 have opposite polarities and are disposed at two ends of the shell 22 in the first direction A, and each electrode terminal 23 is connected to the corresponding tab through a current collecting member 24. The two electrode terminals 23 are configured, one electrode terminal 23 serves as the positive electrode of the battery cell 20, and the other electrode terminal 23 serves as the negative electrode of the battery cell 20. **In** this case, the battery cell 20 does not need to use the shell body 221 as the negative electrode of the battery cell 20, so that the shell body 221 is less prone to corrosion and a short circuit is unlikely to occur between two adjacent batteries 100.

The shell 22 includes a shell body 221 and an end cover 222, the shell body 221 has an opening at one end in the first direction A, the end cover 222 closes the opening, one electrode terminal 23 is disposed on the shell body 221, and the other electrode terminal 23 is disposed on the end cover 222. The shell body 221 has the opening at one end in the first direction A, which facilitates insertion of the electrode assembly 21 into the shell (assembling the electrode assembly 21 into the shell body 221) during the production of the battery cell 20. The end cover 222 closes the opening to isolate the inside and outside of the shell body 221, so as to prevent external impurities from damaging the battery cell 20. One electrode terminal 23 is disposed on the end cover 222 and the other electrode terminal 23 is disposed on the shell body 221 to facilitate production and reduce production costs.

The shell 22 includes a shell body 221 and two end covers 222, the shell body 221 has openings at two ends in the first direction A, the two end covers 222 close the two openings, and the two electrode terminals 23 are disposed on the two end covers 222 in one-to-one correspondence. The shell body 221 has the openings at two ends in the first direction A, which facilitates insertion of the electrode assembly 21 into the shell (assembling the electrode assembly 21 into the shell body 221) during the production of the battery cell 20. The end covers 222 close the openings to isolate the inside and outside of the shell body 221, so as to prevent external impurities from damaging the battery cell 20. The two electrode terminals 23 are disposed on the two end covers 222 in one-to-one correspondence to facilitate production and reduce production costs.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. A battery cell, comprising:
an electrode assembly, provided with a tab;
a shell, configured for accommodating the electrode assembly;
an electrode terminal, disposed at one end of the shell in a first direction; and
a current collecting member, provided with a hollow region, wherein the hollow region divides the current collecting member into a first connection region and a second connection region located on two sides of the hollow region, wherein the first connection region is connected to the tab, and the second connection region is connected to the electrode terminal.

2. The battery cell according to claim 1, wherein the hollow region comprises two slit portions provided at intervals, the slit portions pass through two surfaces of the current collecting member in a thickness direction, and the second connection region is formed at a portion of the current collecting member between the two slit portions.

3. The battery cell according to claim 2, wherein the slit portions are arc-shaped slits.

4. The battery cell according to claim 3, wherein openings of the two slit portions are opposite to each other.

5. The battery cell according to any one of claims 1-4, wherein the current collecting member is of a flat plate structure.

6. The battery cell according to any one of claims 1-5, wherein the battery cell comprises two electrode terminals, the two electrode terminals have opposite polarities and are disposed at two ends of the shell in the first direction respectively, and each electrode terminal is connected to a corresponding tab through the current collecting member.

7. The battery cell according to claim 6, wherein the shell comprises a shell body and an end cover, one end of the shell body in the first direction has an opening, the end cover closes the opening, one electrode terminal is disposed on the shell body, and the other electrode terminal is disposed on the end cover.

8. The battery cell according to claim 6, wherein the shell comprises a shell body and two end covers, two ends of the shell body in the first direction has openings respectively, the two end covers close the two openings, and the two electrode terminals are disposed on the two end covers in one-to-one correspondence respectively.

9. The battery cell according to any one of claims 1-8, wherein in the first direction, a height of a portion of the electrode terminal protruding from the shell is H, and a length of the shell is L, satisfying H/L ≤ 0.02.

10. The battery cell according to claim 9, wherein H/L ≤ 0.015.

11. The battery cell according to any one of claims 1-10, wherein the shell is cylindrical, an outer diameter of the shell is D, and the length of the shell in the first direction is L, satisfying L/D ≥ 2.

12. The battery cell according to any one of claims 1-11, wherein the electrode terminal comprises a first terminal portion and a second terminal portion of different materials, the first terminal portion is connected to the second terminal portion, the first terminal portion is connected to the current collecting member, and the second terminal portion is mounted on the shell.

13. The battery cell according to claim 12, wherein the material of the first terminal portion is copper, and the material of the second terminal portion is aluminum.

14. The battery cell according to claim 12, wherein the second terminal portion encloses an outer side of the first terminal portion.

15. The battery cell according to claim 14, wherein the first terminal portion is formed with a cavity having an opening at one end.

16. The battery cell according to claim 15, wherein the electrode terminal comprises a third terminal portion, the third terminal portion is connected to the second terminal portion and closes the opening, and the third terminal portion is configured for connection with a busbar member.

17. The battery cell according to claim 12, wherein the first terminal portion and the second terminal portion are laminated in the first direction.

18. The battery cell according to claim 17, wherein a cavity is formed inside the second terminal portion.

19. A battery, comprising:
a box; and
the battery cell according to any one of claims 1-18, wherein the battery cell is accommodated in the box.

20. An electrical device, comprising the battery cell according to any one of claims 1-18 for providing electrical energy, or the battery according to claim 19 for providing electrical energy.
